# EUROPEAN PATENT SPECIFICATION

(11) **EP 4 643 272 B1**
(45) Date of publication and mention of the grant of the patent: **23.09.2026**
(21) Application number: 24713297.0
(22) Date of filing: 22.02.2024
(51) Int. Cl.: G06N 3/0475, G06N 3/092

(54) **OPEN-VOCABULARY ROBOTIC CONTROL USING MULTI-MODAL LANGUAGE MODELS**
OPEN-VOCABULARY-ROBOTERSTEUERUNG UNTER VERWENDUNG VON MULTIMODALEN SPRACHMODELLEN
COMMANDE ROBOTIQUE À VOCABULAIRE OUVERT UTILISANT DES MODÈLES DE LANGUE MULTIMODAUX

(30) Priority: 22.02.2023 US 202363447596 P
(43) Date of publication of application: 05.11.2025
(60) Divisional application: 26198625.1
(73) Proprietor: Google LLC, Mountain View, CA 94043 (US)
(72) Inventor: XIAO, Teddey Ming, Mountain View, California 94043 (US); FINN, Chelsea Breanna, Mountain View, California 94043 (US); STONE, Austin Charles, San Francisco, California 94102 (US); LU, Yao, Palo Alto, California 94303 (US); XIA, Fei, Mountain View, California 94043 (US); LEE, Kuang-Huei, Mountain View, California 94043 (US); HAUSMAN, Karol, Mountain View, California 94043 (US); P G, Keerthana, Mountain View, California 94043 (US); WOHLHART, Paul, Mountain View, California 94043 (US); VUONG, Quan Ho, Mountain View, California 94043 (US)
(74) Representative: Varley, James Richard
(86) International application number: PCT/US2024/016929
(87) International publication number: WO 2024/178241

(56) References cited:
- ANTHONY BROHAN ET AL: "RT-1: Robotics Transformer for Real-World Control at Scale", ARXIV.ORG, CORNELL UNIVERSITY LIBRARY, 201 OLIN LIBRARY CORNELL UNIVERSITY ITHACA, NY 14853, 13 December 2022 (2022-12-13), XP091393451
- KRISHNA MURTHY JATAVALLABHULA ET AL: "ConceptFusion: Open-set Multimodal 3D Mapping", ARXIV.ORG, CORNELL UNIVERSITY LIBRARY, 201 OLIN LIBRARY CORNELL UNIVERSITY ITHACA, NY 14853, 14 February 2023 (2023-02-14), XP091438270
- AUSTIN STONE ET AL: "Open-World Object Manipulation using Pre-trained Vision-Language Models", ARXIV.ORG, CORNELL UNIVERSITY LIBRARY, 201 OLIN LIBRARY CORNELL UNIVERSITY ITHACA, NY 14853, 2 March 2023 (2023-03-02), XP091450363

## Description

### BACKGROUND

This specification relates to controlling agents using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

"RT-1: Robotics Transformer for Real-World Control at Scale" (A. Brohan et al., arXiv:2212.06817, 2022) discloses a model class, dubbed Robotics Transformer, that exhibits promising scalable model properties when transferring knowledge from large, diverse, task-agnostic datasets, to specific downstream tasks either with zero-shot or with small task-specific datasets to a high level of performance.

"ConceptFusion: Open-set Multimodal 3D Mapping" (K. Murthy et al., arXiv:2302.07241, 2023) discloses "ConceptFusion", a scene representation that is (1) fundamentally open-set, enabling reasoning beyond a closed set of concepts and (ii) inherently multimodal, enabling a diverse range of possible queries to the 3D map, from language, to images, to audio, to 3D geometry, all working in concert. ConceptFusion leverages the open-set capabilities of today's foundation models pre-trained on internet-scale data to reason about concepts across modalities such as natural language, images, and audio. It is demonstrated that pixel-aligned open-set features can be fused into 3D maps via traditional SLAM and multi-view fusion approaches. This enables effective zero-shot spatial reasoning, not needing any additional training or finetuning

### SUMMARY

This specification describes a system implemented as computer programs on one or more computers in one or more locations that controls an agent, e.g., a robot, that is interacting in an environment by selecting actions to be performed by the agent and then causing the agent to perform the actions. The invention is defined in the appended claims.

The subject matter described in this specification can be implemented in particular embodiments so as to realize one or more of the following advantages. This specification describes techniques for enabling robots to comprehend and execute instructions that involve objects, environments, or both not previously encountered. By leveraging a vision-language model to extract relevant visual information, including object localization information, from observation images based on natural language instructions and conditioning a robot control policy on both the instructions and the extracted visual information, the described techniques enable the robot control policy to generalize rapidly and effectively to a wider range of agent control tasks.

In some implementations, the vision-language model can have been pre-trained on a large number of image-text pairs and will need no or minimal further training jointly with the robot control policy. Thus, in addition to the savings in computational and memory resources that would otherwise be needed to train such a vision-language model, the described techniques can also leverage the knowledge learned by the vision-language model from the large-scale pre-training to achieve "zero-shot generalization" of a robot control policy, i.e., can adapt the robot control policy to achieve an acceptable level of performance on an agent control task that involves interaction with an object, an environment, or both that are previously unseen, without requiring the policy to be trained on any training examples that include either the object or the environment.

An agent control system implementing the described techniques therefore provides a general purpose model for agent control that is more broadly applicable than conventional agent control systems. The agent control system enables more efficient use of computational resources (e.g., memory and computing power) by requiring less training data and fewer training iterations than conventional systems to achieve an acceptable level of performance on controlling agents to interact with previously unseen objects or environments.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example policy system and an example control system.
FIG. 2 is an example illustration of controlling an agent by using a policy system.
FIG. 3 is a flow diagram of an example process for controlling an agent interacting with an environment.
FIG. 4 is a flow diagram of another example process for controlling an agent interacting with an environment.
FIG. 5 is a flow diagram of an example process for training neural networks included in a policy system.
FIG. 6 shows a quantitative example of the performance gains that can be achieved by using a policy system described in this specification.

Like reference numbers and designations in the various drawings indicate like elements.

### DETAILED DESCRIPTION

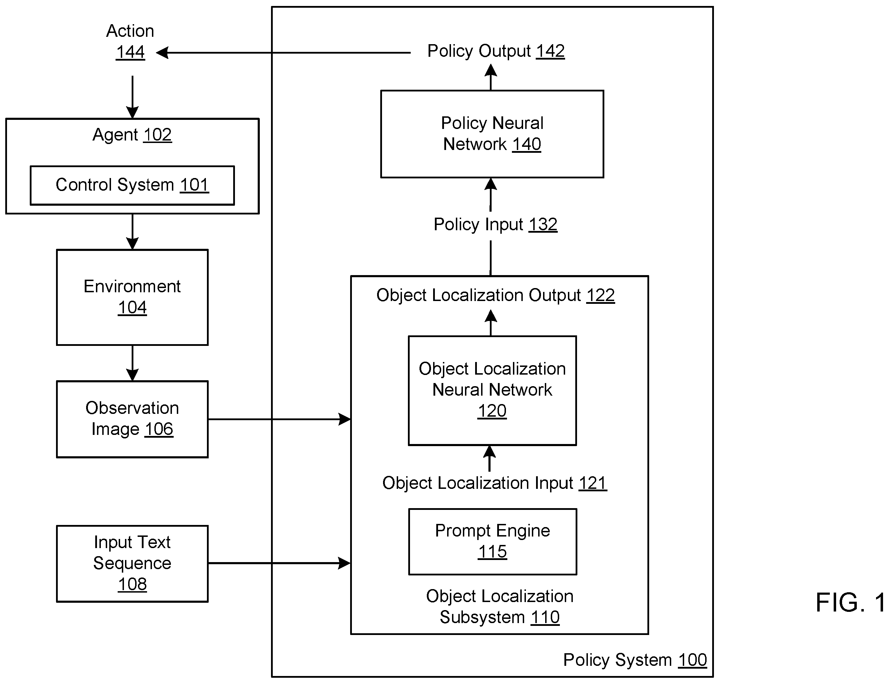

FIG. 1 shows an example policy system 100 and an example control system 101. The policy system 100 and the control system 101 are examples of a system implemented as computer programs on one or more computers in one or more locations in which the systems, components, and techniques described below are implemented.

The policy system 100 and the control system 101 can control an agent 102, e.g., a robot, to accomplish any of a wide variety of tasks in the environment 104. To control the agent 102 that is interacting in the environment 104 to accomplish a task, the policy system 100 selects actions 144 to be performed by the agent 102, and the control system 101 then causes the agent 102 to perform the selected actions 144.

As a general example, the task can include one or more of, e.g., causing the agent to navigate to different locations in the environment which avoiding obstacle objects along the way, causing the agent to locate different objects, causing the agent to pick up different objects or to move different objects to one or more specified locations, and so on. To accomplish such a task, the agent 102 moves, e.g., navigates and/or changes its configuration, within the environment 104.

Typically, the control system 101 is local to the agent 102. For example, the control system 101 can be on-board the agent 102, e.g., can be implemented on one or more computers, a local workstation, or a local server having relatively small processing and memory resources that is on-board the agent 102, e.g., having limited processing power and/or a constrained memory space.

In some implementations, the policy system 100 is local to the agent 102. For example, like the control system 101, the policy system 100 can also be on-board the agent 102. Moreover, in some of these implementations, the policy system 100 can be a part of the control system 101 which causes the agent 102 to perform actions 144.

In other implementations, the policy system 100 is remote from the agent 102. For example, unlike the control system 101, the policy system 100 can be hosted within a data center, which can be a distributed computing system having hundreds or thousands of computers in one or more locations. That is, the control system 101 can receive data identifying the actions 144 from an external source, e.g., rather than generating such data on-board the agent 102.

In these implementations, the policy system 100 and the control system 101 can be connected by a data communication network, such as a local area network (LAN), a wide area network (WAN), the Internet, or a combination thereof.

In these implementations, the control system 101 of the agent 102 interacts with a remote policy system 100 that is hosted within a data center with much more computing and other resources than those available on-board the agent 102 to reduce the latency in selecting actions 144, reduce the consumption of the limited power supply of the agent 102 when selecting actions 144, or both.

In some implementations, the policy system 100, the control system 101, or both can expose one or more application programming interfaces (APIs) or other data interfaces that facilitate the control of the agent 102. For example, a user of the agent 102 may use an API made available by the action selection system 100 to provide input text sequences 108 in a natural language that characterizes the tasks to be performed by the agent. As another example, the policy system 100 and the control system 101 can interact through an API between the two system, e.g., the control system 101 can use the API to provide the observations 106 to the policy system 100, and the policy system 100 can use the API to provide data specifying the determined actions 144 to the control system 101.

The policy system 100 includes an object localization subsystem 110 and a policy neural network 140. The object localization subsystem 110 includes a prompt engine 115 and an object localization neural network 120.

In particular, the policy system 100 and the control system 101 control the agent 102 based on object localization outputs 122 generated by the object localization neural network 120 and policy outputs 140 generated by the policy neural network 140 in response to observation images 106 characterizing the environment 104 and an input text sequence 108 that describes the task to be performed by the agent 102.

At each of a plurality of time steps, the policy system 100 obtains an observation image 106 characterizing a state of the environment 104 at the time step. The observation image 106 can be obtained from a camera sensor (e.g., a camera sensor of the agent 102 or a camera sensor located in the environment 104), or from the control system 101 of the agent 102. The camera sensor can for example be a still camera or a video camera. For example, the control system 101 of the agent 102 obtains, from the camera sensor, the observation image 106 of the environment 104 at the time step, and then provides the observation image 106 to the policy system 100. The observation image 106 comprises, for example, an array of pixel data. The array of pixel data may comprise a plurality of channels, e.g., a plurality of colors channels, such as RGB channels.

In implementations where the policy system 100 is remote from the agent 102, providing the observation image 106 to the policy system 100 can include, for example, transmitting data representing the observation image 106 over the data communication network that connects the policy system 100 and the control system 101. As another example, providing the observation image 106 to the policy system 100 can include providing to the policy system 100 data that specifies a name or a network location (e.g., a Uniform Resource Locator (URL) of a server from which the policy system 100 can obtain the observation image 106.

The input text sequence 108 can be any sequence of text in a natural language that references one or more target objects in the environment 104 that are to be interacted with or referenced by the agent 102 when performing the task. The input text sequences 108 can be received from another agent in the environment 104 or from the control system 101 of the agent 102. For example, another agent in the environment 104 can speak an instruction and the control system 101 or another system can transcribe it into a natural language text sequence, and then provide the transcription to the policy system 100. As another example, the control system 101 can receive an instruction, e.g., a text-based input, a selection-based input, or an audio-based input, entered by a user that specifies the input text sequence 108. and then provide the instruction to the policy system 100.

At the first time step in the plurality of time steps, the object localization subsystem 110 generates an object localization input 121 that includes the observation image 106 obtained at the first time step. Optionally, in implementations where the object localization neural network 120 is configured as a multi-modal neural network that processes both text and image input data, the object localization input 121 also includes a prompt that is derived from the input text sequence 108.

The object localization subsystem 110 processes the object localization input 121 using the object localization neural network 120 to generate an object localization output 122 for the first time step that identifies respective locations of the one or more target objects in the observation image 106 obtained at the first time step.

The object localization neural network 120 can be any appropriate neural network that has been configured through training to identify the locations of objects depicted in images. For example, the object localization neural network 120 can be single-modal neural network, e.g., a convolutional neural network or a vision Transformer (ViT) neural network. As another example, the object localization neural network 120 can be a multi-modal neural network, e.g., a visual-language model neural network that includes both an image encoder neural network (which can for example be configured as a convolutional neural network or a ViT neural network) and a text encoder neural network (which can for example be configured as a multi-layer perceptron or a Transformer neural network).

A few example multi-modal neural network architectures as well as techniques for training such multi-modal neural networks are described in M. Minderer, A. A. Gritsenko, A. Stone, M. Neumann, D. Weissenborn, A. Dosovitskiy, A. Mahendran, A. Arnab, M. Dehghani, Z. Shen, X. Wang, X. Zhai, T. Kipf, and N. Houlsby. Simple open-vocabulary object detection with vision transformers. European Conference on Computer Vision (ECCV); Zhai, X., Wang, X., Mustafa, B., Steiner, A., Keysers, D., Kolesnikov, A., Beyer, L.: LiT: Zero-shot transfer with locked-image text tuning. arXiv preprint arXiv:2111.07991; Zhong, Y., Yang, J., Zhang, P., Li, C., Codella, N., Li, L.H., Zhou, L., Dai, X., Yuan, L., Li, Y., et al.: RegionCLIP: Region-based language-image pretraining. arXiv preprint arXiv:2112.09106; and Zhou, X., Girdhar, R., Joulin, A., Krahenbuhl, P., Misra, I.: Detecting twenty thousand classes using image-level supervision. In: arXiv preprint arXiv:2201.02605.

When the object localization neural network 120 is configured as a multi-modal neural network, the object localization subsystem 110 can use a prompt engine 115 to generate the prompt that is provided alongside the observation image 106 as input to the object localization neural network 120. The prompt can generally be a natural language phrase that describes the one or more target objects.

In some implementations, the prompt is the same as the input text sequence 108. That is, the object localization input 121 to the object localization neural network 120 includes the observation image 106 received by the policy system 100 at the first time step and the input text sequence 108 received by the policy system 100.

For example, when the input text sequence 108 has the form of "move X near Y," the prompt can similarly have the form of "move X near Y," where X and Y each represent a respective target object, e.g., X = "yellow banana" and Y = "cup." As another example, when the input text sequence 108 has the form of "pick X," the prompt can similarly have the form of "pick X." As another example, when the input text sequence 108 has the form of "place X into Y." the prompt can similarly have the form of "place X into Y."

In other implementations, the prompt is different from the input text sequence 108. For example, when the input text sequence 108 has the form of "move X near Y," "pick X," or "place X into Y," the prompt can have a different form of "an image of an X" or "a photo of an X." Optionally, the input text sequence 108 can include additional, descriptive phrases that describe various aspects, e.g., the color, size, or shape, of the target object.

To generate such a natural language phrase, the prompt engine 115 identifies, from the input text sequence 108, object-related text segments that describe the one or more target objects, e.g., by using a semantic parsing algorithm to parse the input text sequence 108 or by querying a language model neural network using the input text sequence 108. The prompt engine 115 then generates the natural language phrase by including the identified object-related text segments in the natural language phrase.

Such object-related text segments are generally different from skill-related text segments included in the input text sequence 108 that describe one or more skills required by the task. A skill generally involves one or more actions, e.g., a grasp action, a push action, a placement action, and so on, that can be performed by the agent 102 on any of a variety of objects. In the example above, "X" and "Y" could each be an object-related text segment, while "move" could be a skill-related text segment. In other words, the prompt engine 115 separates the portion of the input text sequence 108 that are related to the target objects from the other portion of the input text sequence 108 that are related to actions to be performed on the target objects.

The object localization output 122, which is generated by the object localization neural network 120 from processing the object localization input 121, can identify the respective locations of the one or more target objects in any appropriate way.

In some implementations, the object localization output 122 can include a segmentation mask that defines a respective pixel location of each of the one or more target objects in the observation image 106. A segmentation mask as described herein is a digital representation of those pixel locations of the observation image 106 that have been identified as the predicted locations of one or more target objects, and those pixel locations that have not been identified as the predicted locations of one or more target objects.

For example, the segmentation mask can include a first positive value for each of one or more pixels located within a depiction of a first target object in the observation image 106, a second positive value for each of one or more pixels located within a depiction of a second target object in the observation image 106, and so on, and zero values for remaining pixels included in the observation image 106. The first and the second positive values may be the same (e.g., they are both set to 1.0) or may alternatively be different (e.g., the first positive value is 1.0 and the second positive value is 0.5).

In some implementations, the object localization output 122 can include bounding box data, or data derived from the bounding box data that defines a respective bounding box that encompasses each of the one or more target objects in the observation image 106. The bounding box can be rectangular in shape, or can alternatively have any other shape (e.g., circle, ellipse, pentagon, octagon, etc.). The data derived from the bounding box data can for example include data that defines a pixel location of the center of (or another position within) each bounding box.

In some implementations, the object localization output 122 can include coordinate data, e.g., pixel coordinates in an image frame, that defines the locations of the respective locations of the one or more target objects.

Moreover, in some implementations, the object localization neural network 120 can be configured to account for situations where the one or more target objects referenced in the input text sequence 108 could not be identified from the observation image 106. For example, in those situations, the object localization neural network 120 can generate, as the object localization output 122, a null output indicating that the one or more target objects referenced in the input text sequence 108 are not detected. The null output can be, e.g., a segmentation mask that includes zero values for all of the pixels included in the observation image 106.

At each of the plurality of time steps, the policy system 100 generates a policy input 132. The policy input 132 includes the observation image 106 received at the time step, the input text sequence 108, and the object localization output 122 generated by the object localization neural network 120 at the first step from processing the object localization input 121 that includes the observation image 106 obtained at the first step. In other words, the same object localization output 122 is included in multiple policy inputs 132 across the plurality of time steps that included different observation images 106. In some implementations, the policy input 132 also includes one or more earlier observation images received at one or more earlier time steps that precede the time step.

In implementations described throughout this specification, the policy system 100 generates an object localization output 122 only at the first time step in the plurality of time steps, and repeatedly provides the same object localization output 122 as input to the policy neural network 140 for further processing at each subsequent time step in the plurality of time steps. That is, the object localization subsystem 110, which includes the object localization neural network 120 that may have a larger number of parameters and thus may have a high computational cost, will only be used once at the beginning of each task episode.

Such a configuration makes it more practical to deploy the policy system 100 in some environments where computational resources are limited (for example, locally on a robotic device), for real-time agent control tasks where available time for computation is limited, or both, because repeatedly computing inferences using the object localization neural network 120 across the plurality of time steps is avoided.

However, it has been contemplated that in other environments that have sufficient computational and/or network resources, the object localization output 122 may be used more frequently during the task episode, e.g., a new object localization output is generated once every twenty time steps, once every ten time steps, or even once every time step based on an observation image obtained at the corresponding time step, such that different object localization outputs 122 are included in multiple policy inputs 132 across the plurality of time steps that include different observation images 106.

At each of the plurality of time steps, after having generated the policy input 132, the policy system 100 then processes the policy input 132 using a policy neural network 140 to generate a policy output 142 that defines an action to be performed by the agent 102 in response to the observation image 106 received at the time step.

A particular example architecture will be described further below, but more generally, the policy neural network 140 can have any appropriate neural network architecture that allows the policy neural network 140 to map a policy input 132 to a corresponding policy output 142 that specifies an action 144 to be performed by the agent 102. For example, the policy neural network 140 can include any appropriate types of neural network layers (e.g., convolutional layer, conditioning layers, attention layers, and so forth) in any appropriate number (e.g., 5 layers, or 10 layers, or 50 layers) and connected in any appropriate configuration (e.g., as a directed graph of layers).

The policy output 142 can specify the action 144 in any appropriate way. For example, the policy output 142 can include a respective numerical probability value for each action in a set of possible actions that can be performed by the agent 102. In this example, the policy system 100 could determine the action 144 to be performed by the agent 102, e.g., by sampling an action in accordance with the probability values for the actions, or by selecting the action with the highest probability value.

Analogously, the policy output 142 can assign a respective numerical value for each action dimension in a set of action dimensions, e.g., a set of action dimensions for end effector movement, a set of action dimensions for arm movement, a set of action dimensions for base movement, or some combination of these, and the policy system 100 could determine the action 144 to be performed by the agent 102 from the respective numerical values for the set of action dimensions. The numerical values can be assigned either deterministically, e.g., by the policy output 142, or stochastically, e.g., where the policy output 142 parameterizes a distribution for each action dimension from which the numerical value for the action dimension is sampled.

As another example, the policy output 142 can directly define the action to be performed by the agent 102, e.g., by defining the values of torques that should be applied to the joints of a robotic agent.

After having selected the action 144 to be performed by the agent 102 at the time step, the policy system 100 provides data identifying the selected action 144 to the control system 101. In implementations where the policy system 100 is remote from the agent 102, providing the data identifying the selected action 144 can, for example, include transmitting data identifying the selected action 144 over the data communication network that connects the policy system 100 and the control system 101.

The control system 101 then causes the agent 102 to perform the selected action 144. For example, the control system 101 can do this by generating instructions for the agent 102 that when executed will cause the agent 102 to perform the selected action 144, by submitting a control input, e.g., that includes data derived from the selected action 144, directly to the appropriate controls of the agent, or by using another appropriate control technique.

The environment 104 is a real-world environment and the agent 102 is a mechanical agent interacting with the real-world environment. For example, the agent may be a robot interacting with the environment to accomplish a goal, e.g., to locate an object of interest in the environment, to move an object of interest to a specified location in the environment, to physically manipulate an object of interest in the environment in a specified way, or to navigate to a specified destination in the environment; or the agent may be an autonomous or semi-autonomous land, air, or sea vehicle navigating through the environment to a specified destination in the environment.

The actions 144 may be control inputs to control a robot, e.g., torques for the joints of the robot or higher-level control commands, or the autonomous or semi-autonomous land or air or sea vehicle, e.g., torques to the control surface or other control elements of the vehicle or higher-level control commands.

In other words, the actions 144 can include for example, position, velocity, or force/torque/acceleration data for one or more joints of a robot or parts of another mechanical agent. Actions may additionally or alternatively include electronic control data such as motor control data, or more generally data for controlling one or more electronic devices within the environment the control of which has an effect on the observed state of the environment. For example in the case of an autonomous or semi-autonomous land, air, or sea vehicle the actions may include actions to control navigation, e.g., steering, and movement e.g., braking and/or acceleration of the vehicle.

In some implementations the environment 104 is a simulated environment and the agent 102 is implemented as one or more computer programs interacting with the simulated environment. For example, the environment can be a computer simulation of a real-world environment and the agent can be a simulated mechanical agent navigating through the computer simulation.

For example, the simulated environment may be a motion simulation environment, e.g., a driving simulation or a flight simulation, and the agent may be a simulated vehicle navigating through the motion simulation. In these implementations, the actions 144 may be control inputs to control the simulated user or simulated vehicle. As another example, the simulated environment may be a computer simulation of a real-world environment and the agent may be a simulated robot interacting with the computer simulation.

Generally, when the environment 104 is a simulated environment, the actions 144 may include simulated versions of one or more of the previously described actions or types of actions.

In some implementations, the environment 104 is a suitable execution environment, e.g., a runtime environment or an operating system environment, that is implemented on one or more computing devices such as smart phones, tablet computers, wearable devices, automobile systems, standalone personal assistant devices, and so forth, and the agent 102 is a virtual agent (also known as "automated assistant " or "mobile assistant") that may be interacted with by a user through the computing devices. The virtual agent can receive input from the user (e.g., typed or spoken natural language input) and respond with responsive content (e.g., visual and/or audible natural language output). The virtual agent can provide a broad range of functionalities through interactions with various local and/or third-party applications, websites, or other agents. In these implementations, the actions 144 may include any activity or operation that may be performed or initiated by the user on a computing device, e.g., within an application software installed on the computing device.

In some cases, the policy system 100 can be used to control the interactions of the agent with a simulated environment, and the policy system 100 (or another training system) can train the neural networks used to control the agent 102 based on the interactions of the agent 102 (or another agent) with the simulated environment to determine trained values of the parameters of the neural networks.

After the neural networks are trained based on the interactions of the agent 102 (or another agent) with a simulated environment, the trained neural networks can be used by the policy system 100 to control the interactions of a real-world agent with the real-world environment, i.e., to control the agent that was being simulated in the simulated environment.

Training the neural networks based on interactions of an agent with a simulated environment (i.e., instead of a real-world environment) can avoid wear-and-tear on the agent and can reduce the likelihood that, by performing poorly chosen actions, the agent can damage itself or aspects of its environment.

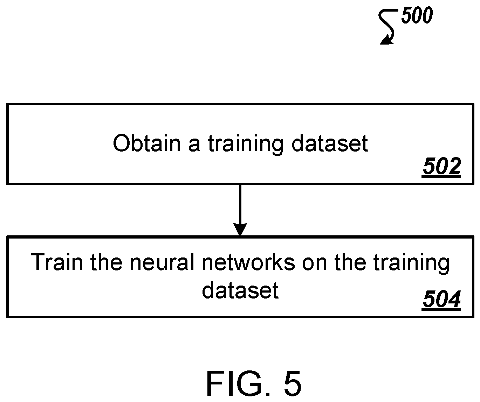

In some cases, the object localization neural network 120 has been pre-trained prior to the training of the policy neural network 140. For example, as will be described in more detail below with reference to FIG. 5, the policy system 100 can be trained on a few thousands of training examples that each correspond to a task episode, while the object localization neural network 120 can have been pre-trained on a much larger training dataset, e.g., an Internet-scale training dataset, that includes millions or billions of image and text pairs.

In these cases, the knowledge learned by the object localization neural network 120 from the large-scale pre-training extends the capability of the policy neural network 140 to generate policy outputs 142 for controlling the agent 102 to select actions 144 to interact with objects, environments, or both that are not previously encountered during the training of the policy neural network 140. By leveraging the pre-trained object localization neural network 120, the policy system 100 can generalize rapidly and effectively to a wider range of agent control tasks compared to other agent control systems that do not condition a policy neural network on the object localization outputs when determining which actions 144 to select for performance by the agent 102.

For example, once trained, the policy system 100 can be used to control a service robot (e.g., a home or domestic robot) to perform household tasks that involve retrieving various household objects that are were previously unseen during the training, either in simulation or in real-world environment. As an example of this, the policy system 100 can effectively control the service robot to perform a household task by selecting actions to be performed by the service robot that would result in successful retrieval of a pink stuffed whale, in response to an input text sequence "can you get me the pink stuffed whale," despite the training dataset for the policy system 100 does not include any training examples that correspond to task episodes that involve manipulating a pink stuffed whale as a target object.

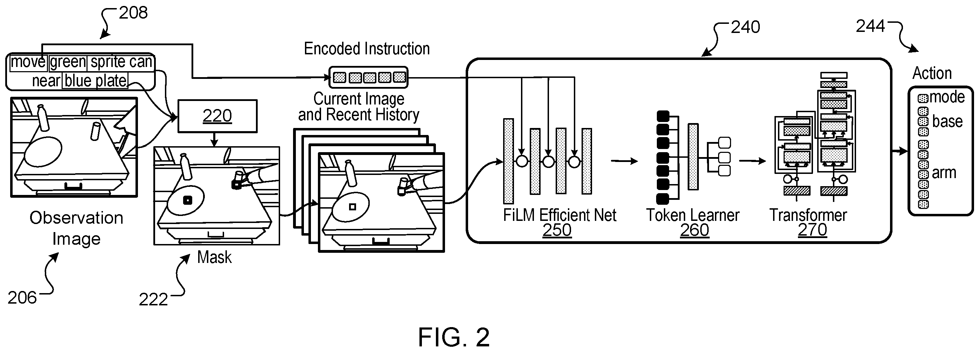

FIG. 2 is an example illustration of controlling an agent by using a policy system. The policy system includes an object localization neural network 220 and a policy neural network 240. The object localization neural network 220 and the policy neural network 240 can be the same as or similar to the object localization neural network 120 and the policy neural network 140 in FIG. 1, respectively.

The policy system 200 receives an input text sequence 208. The input text sequence 208 characterizes a task to be performed by the agent in the environment. The input text sequence 208 may be a sequence of text in a natural language that has an instructional format. For example, FIG. 2 illustrates that the input text sequence 208 is a natural language instruction that describes the task, "move green sprite can near blue plate."

The policy system generates an encoded representation of the input text sequence 208. In some implementations, the policy system can do this by processing the input text sequence 208 using a text encoder neural network. The text encoder neural network can be configured as any appropriate neural network, e.g., a multi-layer perceptron or an attention neural network. The encoded representation can be or include an embedding of the input text sequence 208. An "embedding" as used in this specification is a sequence of one or more vectors of numeric values, e.g., floating point values or other values, each vector having a pre-determined dimensionality.

At each of a plurality of time steps, the policy system obtains an observation image 206 characterizing a state of the environment at the time step. In the example of FIG. 2, the agent performs a single action in response to each observation image 206, e.g., so that a new observation image is obtained by the policy system after each action that the agent performs.

At the first time step in the plurality of time steps, the policy system generates an object localization input that includes (i) a prompt that is generated by a prompt engine and (ii) the observation image 206 obtained at the first time step and processes the object localization input using the object localization neural network 220 to generate an object localization output 222.

To generate the prompt, the prompt engine identifies, from the input text sequence 208, two object-related text segments "green sprite can" and "blue plate", and one skill-related text segment "move". The prompt is thus a natural language phrase that includes the object-related text segments "green sprite can" and "blue plate".

The object localization output 222 identifies respective locations of the one or more objects in the observation image 206 obtained at the first time step. As illustrated, the object localization output 222 can include a segmentation mask that defines a pixel location of the green sprite can (illustrated as the square on the right) and a pixel location of the blue plate (illustrated as the square on the left) in the observation image 206 obtained at the first time step.

The segmentation mask preserves the spatial resolution of the observation image 206. That is, the spatial resolution of the segmentation mask and the observation image 206 have the same spatial resolution, i.e., have the same number of pixels, but the segmentation mask generally includes different values for the locations of the pixels the observation image 206. For example, the segmentation mask can be in the form of a single channel object mask that includes a non-zero value for a pixel located within the green sprite can in the observation image 206, a non-zero value for a pixel located within the blue plate in the observation image 206, and zero values for remaining pixels included in the observation image 206.

At each of the plurality of time steps, the policy system then generates a policy input that includes (i) the encoded representation of the input text sequence 208, (ii) the object localization output 222 that has been generated for the observation image 206 obtained at the first time step, (iii) the current observation image 206 obtained at the current time step, and, optionally, (iv) one or more earlier observation images 206 obtained at one or more earlier (or, previous) time steps, and provides the policy input to the policy neural network 240. In other words, the same object localization output is included in multiple policy inputs across the plurality of time steps that included different observation images.

When the object localization output 222 is in the form of a single channel object mask, or a multi-channel object mask (e.g., where each channel corresponds to an object of interest) the policy system can generate the policy input based on combining the object localization output 222 with the current observation image 206 obtained at the current time step and, optionally, with the one or more earlier observation images 206 obtained at one or more earlier time steps.

For example, the policy system can generate a channel-wise concatenation of the object localization output 222, the observation image, and, optionally, the one or more earlier observation images, i.e., along a channel dimension, and then include the channel-wise concatenation in the policy input. The object localization output 222, the current observation image 206, and the earlier observation images 206 can be concatenated in any order, e.g., in a temporal order where the earliest observation image is at the end of the concatenation, the current observation image 206 is the second one in the concatenation, and the object localization output 222 is at the beginning of the concatenation, or in a different order.

In the example of FIG. 2. the policy neural network 240 includes an image encoder neural network 250, a token neural network 260, and a Transformer neural network 270.

At each of the plurality of time steps, the image encoder neural network 250 processes the policy input for the time step to generate an encoded representation of the channel-wise concatenation. The image encoder neural network 220 generates the encoded representation of the channel-wise concatenation conditioned on the encoded representation of the input text sequence 208. For example, the encoded representation of the channel-wise concatenation can be or include a feature map that includes a respective feature vector for each of a plurality of regions in the observation image 206.

The image encoder neural network 240 can include one or more convolutional layers and one or more conditioning layers. The conditioning layers can be interleaved between other intermediate layers, e.g., the convolutional layers, of the image encoder neural network 250. As a particular example, the conditional layers can be feature-wise Linear Modulation (FiLM) layers that are described in more detail in Ethan Perez, et al. Film: Visual reasoning with a general conditioning layer. Proceedings of the AAAI Conference on Artificial Intelligence, 32(1), Apr. 2018. Doi: 10.1609/aaai.v32i1.11671.

At each of the plurality of time steps, the token neural network 260 processes the encoded representation of channel-wise concatenation to generate a sequence of input tokens. As used in this specification, a "token" is a vector or other ordered collection of numerical values that has a fixed dimensionality, i.e., the number of values in the ordered collection is constant across different tokens. The number of input tokens included in the sequence of input tokens can generally be smaller than the number of feature vectors included in the encoded representation of the channel-wise concatenation.

The token neural network 260 can include one or more pooling layers, one or more attention layers, e.g., spatial attention layers, or both that can map a larger number of feature vectors to a smaller number of feature vectors. As a particular example, the token neural network 260 can be configured to have a TokenLearner architecture that is described in more detail in Michael Ryoo, et al. Tokenleamer: Adaptive space-time tokenization for videos. Advances in Neural Information Processing Systems, 34:12786-12797, 2021.

At each of the plurality of time steps, the Transformer neural network 270 processes the sequence of input tokens to generate the policy output 244 for the time step. The Transformer neural network 270 can be configured as any appropriate Transformer neural network, e.g., a decoder-only Transformer neural network or an encoder-decoder Transformer neural network architecture, that maps the sequence of input tokens to the policy output 244.

In some implementations, each possible action that can be performed by the agent is defined by a respective value for each of a plurality of action dimensions. In these implementations, for each of the plurality of action dimensions, the policy output 244 can define a respective distribution over possible values for the action dimension. To select the action to be performed by the agent at the time step, the policy system can select, for each of one or more of the action dimensions, a respective value within the possible values for the action dimension using the respective distribution.

In the example of FIG. 2, the agent is a robot having a base and one or more arms, where at least one of the arms has an end effector (e.g., a gripper or another tool) attached to its end. In this example, the plurality of action dimensions can include action dimensions for arm movement (e.g., x, y, z, roll, pitch, yaw, and status of the end effector (e.g., open/close status of the gripper)). The plurality of action dimensions can also include action dimensions for base movement (e.g., x, y, and yaw). The plurality of action dimensions can further include an action dimension for mode switch (e.g., for switching between controlling an arm of the robot, controlling the base of the robot, or terminating the episode).

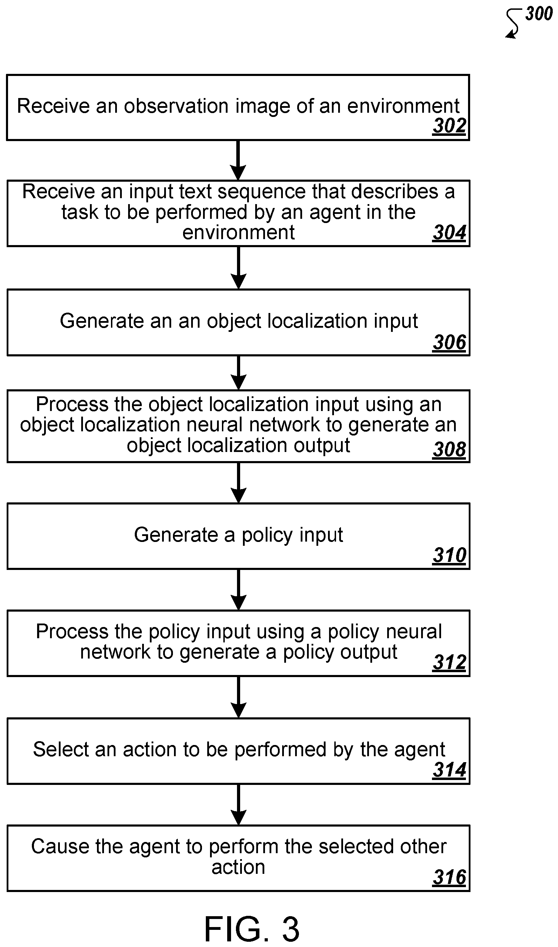

FIG. 3 is a flow diagram of an example process 300 for controlling an agent interacting with an environment. For convenience, the process 300 will be described as being performed by a system of one or more computers located in one or more locations. For example, a policy system, e.g., the policy system 100 of FIG. 1, appropriately programmed in accordance with this specification, can perform the process 300.

In some implementations, the process 300 is performed at the beginning of a task. That is, as a part of controlling the agent to accomplish a task in the environment, the system can perform an iteration of the process 300 at the first time step in a plurality of time steps.

The system receives an observation image of the environment (step 302). When the time step is the first time step in the plurality of time steps, the observation image obtained at the time step can characterize an initial state of the environment. For example, the observation image can be captured by a camera sensor of the agent or by a camera sensor located in the environment.

The system receives an input text sequence (step 304). The input text sequence can be an input sequence of text in a natural language that describes the task to be performed by an agent in the environment. The input text sequence can reference one or more objects in the environment.

The system generates an object localization input that includes the observation image (step 306). Optionally, in implementations where the object localization neural network is configured as a multi-modal neural network that processes both text and image input data, the object localization input can also include a prompt that is derived from the input text sequence.

The prompt, when included, can generally be a natural language phrase that describes the one or more objects. In some implementations, the prompt is the same as the input text sequence. In other implementations, the prompt is different from the input text sequence. For example, the prompt can include the object-related text segments that have been identified from the input text sequence.

The system processes the object localization input using an object localization neural network to generate an object localization output that identifies respective locations of the one or more objects in the observation image (step 308). The object localization output can identify the respective locations of the one or more objects in any appropriate way.

In some implementations, the object localization output can include a segmentation mask that defines a respective pixel location of each of the one or more target objects in the observation image. For example, the segmentation mask can be a single channel object mask or a multi-channel object mask (e.g., where each channel corresponds to an object of interest) that has a non-zero value at at least one pixel location of each of the one or more objects in the observation image, and zero values elsewhere in the observation image.

In some implementations, the object localization output can include bounding box data, or data derived from the bounding box data that defines a respective bounding box that encompasses each of the one or more objects in the observation image.

In some implementations, the object localization output can include coordinate data, e.g., pixel coordinates in an image frame, that defines the locations of the respective locations of the one or more objects.

The system generates a policy input based on the observation image, the input text sequence, and the object localization output (step 310). In some implementations, the policy input includes (i) an encoded representation of the input text sequence, (ii) the object localization output, (iii) the observation image that characterizes the initial state of the environment, and, optionally, (iv) one or more earlier observation images obtained at one or more earlier (or, previous) time steps. For example, the system can generate the encoded representation of the input text sequence by processing the input text sequence using a text encoder neural network.

The system processes the policy input using a policy neural network to generate a policy output that defines an action to be performed by the agent in response to the observation image (step 312). In some implementations, each possible action that can be performed by the agent is defined by a respective value for each of a plurality of action dimensions. To define the action to be performed by the agent, the policy output generated by the policy neural network includes, for each of the plurality of action dimensions, a respective distribution over possible values for the action dimension.

The system selects an action to be performed by the agent using the policy output (step 314). This selection can be made by selecting a respective value for one or more of the plurality of action dimensions using the respective distributions that are defined by the policy output of the policy neural network. When the time step is the first time step in the plurality of time steps, the action can be the first action to be performed by the agent when the environment is in its initial state.

The system causes the agent to perform the selected action (step 316), e.g., by directly submitting the control input to the agent or by transmitting instructions or other data, e.g., over a data communication network, to a control system for the agent that will cause the agent to perform the selected actions.

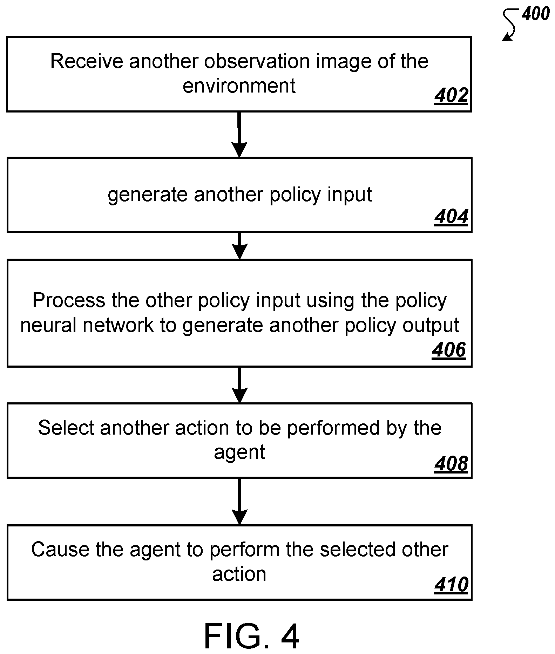

FIG. 4 is a flow diagram of another example process 400 for controlling an agent interacting with an environment. For convenience, the process 400 will be described as being performed by a system of one or more computers located in one or more locations. For example, a policy system, e.g., the policy system 100 of FIG. 1, appropriately programmed in accordance with this specification, can perform the process 400.

In some implementations, the process 400 is repeatedly performed after the system has performed an iteration of the process 300. That is, as a part of controlling the agent to accomplish the task in the environment, the system repeatedly performs an iteration of the process 400 at each of the plurality of time steps that are subsequent to the first time step in the plurality of time steps.

The system receives another observation image of the environment (step 402). The other observation image can characterize a subsequent state of the environment after the initial state of the environment in which the action selected in the process 300 was performed by the agent. As mentioned above, the other observation image can be captured by a camera sensor of the agent or by a camera sensor located in the environment.

The system generates another policy input based on the other observation image, the input text sequence, and the object localization output (step 404). In some implementations, the policy input includes (i) an encoded representation of the input text sequence, (ii) the object localization output that has been generated in the process 300 by the object localization neural network based on the observation image that characterizes the initial state of the environment, (iii) the other observation image that characterizes the subsequent state of the environment, and, optionally, (iv) one or more earlier observation images obtained at one or more earlier (or, previous) time steps.

In particular, the system need not repeatedly use the object localization neural network to compute a new object localization output at each subsequent time step in the plurality of time steps across the task episode. Rather, the system can only generate an object localization output that identifies the respective locations of the one or more objects in the observation image that characterizes the initial state of the environment, and then process the same object localization output alongside different observation images that characterize different states of the environment when controlling the agent interacting with the environment.

The system processes the other policy input using the policy neural network to generate another policy output that defines another action to be performed by the agent in response to the other observation (step 406).

The system selects another action to be performed by the agent using the other policy output (step 408).

The system causes the agent to perform the selected other action (step 410).

The process 300 or 400 can be performed when controlling an agent to perform a task in which the actions that should be performed, e.g., actions that would result in progression towards accomplishing the task, are not known. The process 300 or 400 can also be performed as part of selecting actions to be performed by an agent based on processing observations and input text sequences derived from a training dataset, e.g., observation images the actions in response to which that should be performed by the agent is known, in order to train the set of neural networks to determine trained values for the parameters of the neural networks.

FIG. 5 is a flow diagram of an example process 500 for training neural networks included in a policy system. For convenience, the process 500 will be described as being performed by a system of one or more computers located in one or more locations. For example, a policy system, e.g., the policy system 100 of FIG. 1, or another training system, appropriately programmed in accordance with this specification, can perform the process 500.

To train the neural networks, the system obtains a training dataset (step 502). The training dataset can include training data generated based on the interactions of the agent (or another agent) with an environment.

In one example, the training dataset *D_{robot}* includes *N* training examples. Each training example can be in the form of ${\left\{\left({o}_{j}, {a}_{j}\right)\right\}}_{j = 0}^{T}$ corresponds to a respective episode that spans multiple time steps that each begin from *j* = 0 and ends at *j = T,* when an agent, e.g., agent 102 of FIG. 1, or another agent, successfully accomplished a task.

In each training example, *oⱼ* represents the observation image obtained at time step *j,* and *aⱼ* represents the action performed by the agent at time step *j*. Each training example is associated with a text sequence ℓ in a natural language that describes the task being performed in the episode. For example, ℓ = "move yellow banana near cup." Different episodes may have varying lengths, i.e., may include different numbers of time steps.

In some cases, the objects that are present in the training examples are selected from a predetermined set of objects *S_{robot}.* The predetermined set of objects *S_{robot}* can have a finite size, i.e., include a finite number of different objects, e.g., no more than ten objects, fifth objects, a hundred objects, and so on.

In some cases, the training dataset includes expert interaction data characterizing interactions of one or more expert agents with a corresponding environment. An expert agent can be any agent that selects actions in response to observation images in accordance with an action selection policy that cause the expert agent to make effective progress towards accomplishing a task. For example, the expert agent may be an agent controlled by another already trained policy system, a person who is skilled at the task to be performed by the agent, and so forth.

In some of these cases, the expert interaction data includes simulation data, where a simulated expert agent performs one or more tasks in a simulated environment. In others of these, the expert interaction data includes real-world data, where a real-world expert agent performs one or more tasks in a real-world environment, e.g., through teleoperation. In yet other cases, the expert interaction data includes both simulation data and real-world data.

The system trains the neural networks on the training dataset (step 504). The neural networks can include the object localization neural network 120 and the policy neural network 140 of FIG. 1.

To train the neural networks, the system selects training examples from the training dataset and, for each training example selected from the training dataset, generates training policy outputs that define actions to be performed by an agent based on processing the text sequence associated with the training example and the observation images included in the training example. For example, step 504 can involve performing multiple iterations of the processes 300 and 400.

The system updates the values for the parameters of the neural networks based on using a machine learning training technique, e.g., a gradient descent with backpropagation training technique that uses a suitable optimizer, e.g., stochastic gradient descent, RMSprop, or Adam optimizer, to optimize an objective function.

For example, the objective function can be an imitation learning objective function in the form of: $J \left(π\right) : = {\sum }_{n = 1}^{N} {\sum }_{t = 1}^{{T}^{\left(n\right)}} log π \left({a}_{t}^{\left(n\right)}\left|{l}^{\left(n\right)}, {\left\{{o}_{j}^{\left(n\right)}\right\}}_{j = 1}^{i}\right.\right) .$

In this example, *π*( *a* | ℓ*, o*) is the training policy output, where *a* is an action that is selected based on the image observation o and text sequence ℓ. At each time step during the multiple time steps within a training example sampled from the *N* training examples included in the training dataset *D_{robot},* the imitation learning objective function trains the policy neural network by minimizing a negative log-likelihood of the action *a* given the earlier image observations that precede the time step in the episode and the text sequence ℓ.

In some cases, the object localization neural network, the policy neural network, or both can be pre-trained. For example, the object localization neural network can be pre-trained on a plurality of image-text pairs to perform an object localization task, e.g., a task that requires identifying locations in an image in a pair at which particular types of objects are depicted, a task that requires assigning each pixel of the image to a category from a set of categories, and so on, prior to the joint training of the neural networks on the training dataset *D_{robot}.*

Likewise, the policy neural network can be pre-trained, e.g., on a language modeling task, e.g., a task that requires predicting, given a sequence of text tokens, the next token that follows the current sequence in the sequence, prior to the joint training of the neural networks on the training dataset *D_{robot}.* As a particular example, the policy neural network can be pre-trained on a maximum-likelihood objective on a large dataset of text, e.g., text that is publicly available from the Internet or another text corpus.

In some cases, the object localization neural network is then fine-tuned during the joint training, while in other cases, the object localization neural network is held fixed during the joint training, i.e., the joint training of neural networks on the training dataset *D_{robot}* does not adjust the pre-trained parameter values of the pre-trained object localization neural network, and instead only adjusts the pre-trained parameter values of the policy neural network.

In some cases, the training dataset *D_{robot}* includes a few thousands of training examples that each correspond to a task episode, while the object localization neural network can have been pre-trained on a much larger training dataset, e.g., an Internet-scale training dataset, that includes millions or billions of image and text pairs. Correspondingly, the images used to pre-train the object localization neural network depict a much wider range of objects, many of which are not included in the finite number of different objects within the predetermined set of objects *S_{robot}.*

Thus, while the policy neural network need only be fine-tuned using a relatively small set of expert demonstration data characterizing interactions of one or more expert agents with, e.g., ten, fifty, or a hundred different objects, in a corresponding environment, the object localization neural network is broadly pre-trained on a large number of, e.g., a billion, a hundred billion, or more, image-text pairs and thus can effectively generate object localization outputs based on observation images that, once consumed by the policy neural network, can boost the performance of the policy neural network in generating policy outputs for action selection in agent control tasks that involve manipulating objects previously unseen in the expert demonstration data.

The system described in this specification can thus control the agent to perform "open-vocabulary" object manipulation tasks, i.e., the system can control the agent to perform tasks that involve manipulating, e.g., grasping, impacting, or displacing, objects in any of a wide range of object categories. In contrast, conventional agent control systems may be limited to detecting objects in a small, fixed set of object categories.

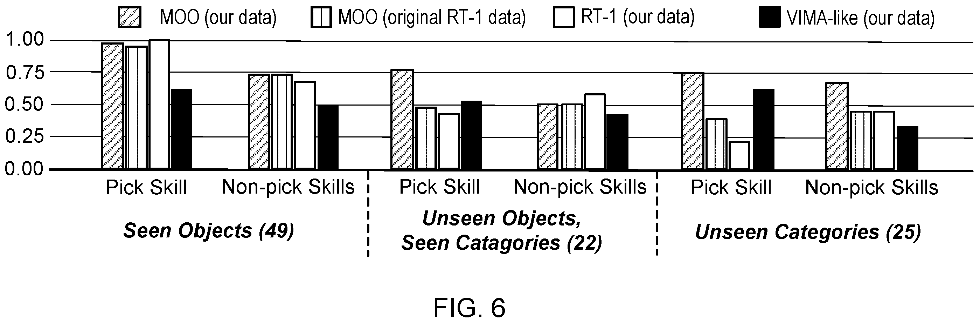

FIG. 6 shows a quantitative example of the performance gains that can be achieved by using a policy system described in this specification. Specifically, FIG. 6 shows overall performance of an agent (in term of success rate where 1.00 corresponds to 100% success rate) controlled using the policy 100 of FIG. 1 (MOO) and agents controlled using baseline systems across different tasks. The baseline systems include an RT-1 system (described in A. Brohan, et al. RT-1: Robotics transformer for real-world control at scale. Robotics: Science and Systems (RSS), 2023) and a VIMA system (described in Y. Jiang, et al. VIMA: General robot manipulation with multimodal prompts. International Conference on Machine Learning (ICML), 2023). "MOO (our data)" refers to the policy 100 of FIG. 1 trained on the training dataset mentioned in FIG. 5; "MOO (original RT-1 data)" refers to the policy 100 of FIG. 1 trained on the same training dataset that was used to train the RT-1 system.

In FIG. 6, "seen objects" represent tasks that involve manipulating objects that were seen during training; "unseen objects, seen categories" represent tasks that involve manipulating objects that were unseen during training, but are in the same category as those objects that were seen during training, e.g., the task requires manipulating a blue cup while only red cups were present in the training dataset; "unseen categories" represent tasks that involve manipulating objects in novel categories that were unseen during training. "Pick skill" represents tasks that involve picking up an object, while "non-pick" skills represent tasks that do not involve picking up an object, e.g., "move near" and "knock" tasks.

It can be appreciated that, MOO outperforms these baseline systems on most of these tasks. In particular, MOO demonstrate strong generalization to unseen objects and unseen object categories compared to these baseline systems (e.g., 75% success rate of MOO vs about 50% success rates of RT-1 and VIMA on tasks that involve manipulating objects that were unseen during training).

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app. a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices: magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a JAX framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
receiving an observation image (106) of an environment (104);
receiving an input text sequence (108) that describes a task to be performed by an agent (102) in the environment and that references one or more objects in the environment;
generating an object localization input (121) that includes (i) a natural language phrase describing the one or more objects and (ii) the observation image;
processing the object localization input using an object localization neural network (120) to generate an object localization output (122) that identifies respective locations of the one or more objects in the observation image;
generating a policy input (132) based on the observation image, the input text sequence, and the object localization output;
processing the policy input using a policy neural network (140) to generate a policy output (142) that defines an action (144) to be performed by the agent in response to the observation image;
selecting an action to be performed by the agent using the policy output; and
causing the agent to perform the selected action,
wherein the environment is a real-world environment; and
wherein the agent is a mechanical agent.

2. The method of claim 1, wherein generating the object localization input comprises:
parsing the input text sequence to identify first text segments that describe the one or more objects and second text segments that describe one or more skills required by the task; and
generating the natural language phrase describing the one or more objects by including the first text segments in the natural language phrase.

3. The method of claim 2, wherein parsing the input text sequence to identify the first text segments that describe the one or more objects comprises:
querying a language model neural network to identify the first text segments from the input text sequence.

4. The method of any one of claims 1-3, wherein the object localization output comprises a segmentation mask that defines a respective pixel location of each of the one or more objects in the observation image.

5. The method of any one of claims 1-3, wherein the object localization output comprises bounding box data that defines a respective bounding box that encompasses each of the one or more objects in the observation image.

6. The method of any one of claims 1-5, wherein generating the policy input based on the observation image, the input text sequence, and the object localization output comprises:
generating, from the object localization output, a single channel object mask that has a non-zero value at at least one pixel location of each of the one or more objects in the observation image and zero values elsewhere in the observation image; and
generating a channel-wise concatenation of the object mask and the observation image.

7. The method of any one of claims 2-6, wherein processing the policy input using the policy neural network to generate the policy output comprises:
processing the channel-wise concatenation using an encoder neural network that is conditioned on the encoded representation of the second text segments to generate an encoded representation of channel-wise concatenation;
processing the encoded representation of channel-wise concatenation using a token learner neural network to generate a sequence of input tokens; and
processing the sequence of input tokens using a Transformer neural network to generate the policy output.

8. The method of claim 7, wherein the policy output comprises, for each of a plurality of action dimensions, a respective distribution over possible values for the action dimension, and wherein selecting the action to be performed by the agent using the policy output comprises selecting a respective value for one or more of the action dimensions using the respective distributions.

9. The method of any one of claims 7-8, wherein the encoder neural network comprises one or more conditioning layers configured as feature-wise Linear Modulation FiLM, layers, and/or, wherein the object localization neural network is a configured as a vision Transformer, ViT, neural network.

10. The method of any one of claims 1-9, further comprising:
receiving another observation image of the environment, wherein the other observation image characterizes a subsequent state of the environment after an initial state of the environment in which the selected action was performed by the agent;
generating another policy input based on the other observation image, the input text sequence, and the object localization output;
processing the other policy input using the policy neural network to generate another policy output that defines another action to be performed by the agent in response to the other observation;
selecting another action to be performed by the agent using the other policy output; and
causing the agent to perform the selected other action.

11. The method of any one of claims 1-10, wherein the policy neural network is trained through imitation learning using expert demonstration data characterizing interactions of one or more expert agents with a corresponding environment while parameter values of the object localization neural network are held fixed during the training.

12. The method of any one of claims 1-11, wherein the object localization output is a null output indicating that the one or more objects referenced in the input text sequence are not detected.

13. The method of any preceding claim, wherein the agent is a robot and the one or more computers are on-board the robot.

14. A system comprising one or more computers and one or more storage devices storing instructions that are operable, when executed by the one or more computers, to cause the one or more computers to perform the operations of the respective method of any one of claims 1-13.

15. A computer storage medium encoded with instructions that, when executed by one or more computers, cause the one or more computers to perform the operations of the respective method of any one of claims 1-13.

## Patentansprüche

1. Computerimplementiertes Verfahren, umfassend:
Empfangen eines Beobachtungsbildes (106) einer Umgebung (104); Empfangen einer Eingabetextsequenz (108), die eine durch einen Agenten (102) in der Umgebung durchzuführende Aufgabe beschreibt und die sich auf ein oder mehrere Objekte in der Umgebung bezieht;
Erzeugen einer Objektlokalisierungseingabe (121), die (i) eine das eine oder die mehreren Objekte beschreibende natürlichsprachliche Phrase und (ii) das Beobachtungsbild beinhaltet;
Verarbeiten der Objektlokalisierungseingabe unter Verwendung eines neuronalen Netzwerks zur Objektlokalisierung (120), um eine Objektlokalisierungsausgabe (122) zu erzeugen, die jeweilige Orte des einen oder der mehreren Objekte in dem Beobachtungsbild identifiziert;
Erzeugen einer Richtlinieneingabe (132) basierend auf dem Beobachtungsbild, der Eingabetextsequenz und der Objektlokalisierungsausgabe;
Verarbeiten der Richtlinieneingabe unter Verwendung eines neuronalen Richtliniennetzwerks (140), um eine Richtlinienausgabe (142) zu erzeugen, die eine durch den Agenten als Reaktion auf das Beobachtungsbild durchzuführende Aktion (144) definiert;
Auswählen einer durch den Agenten durchzuführenden Aktion unter Verwendung der Richtlinienausgabe; und
Bewirken, dass der Agent die ausgewählte Aktion durchführt,
wobei die Umgebung eine reale Umgebung ist; und
wobei der Agent ein mechanischer Agent ist.

2. Verfahren nach Anspruch 1, wobei das Erzeugen der Objektlokalisierungseingabe Folgendes umfasst:
Parsen der Eingabetextsequenz, um erste Textsegmente, die das eine oder die mehreren Objekte beschreiben, und zweite Textsegmente, die eine oder mehrere von der Aufgabe benötigte Fähigkeiten beschreiben, zu identifizieren; und
Erzeugen der das eine oder die mehreren Objekte beschreibenden natürlichsprachlichen Phrase durch Einbeziehen der ersten Textsegmente in die natürlichsprachliche Phrase.

3. Verfahren nach Anspruch 2, wobei das Parsen der Eingabetextsequenz, um die ersten Textsegmente zu identifizieren, die das eine oder die mehreren Objekte beschreiben, umfasst:
Abfragen eines neuronalen Sprachmodellnetzwerks, um die ersten Textsegmente aus der Eingabetextsequenz zu identifizieren.

4. Verfahren nach einem der Ansprüche 1-3, wobei die Objektlokalisierungsausgabe eine Segmentierungsmaske umfasst, die einen jeweiligen Pixelort jedes des einen oder der mehreren Objekte in dem Beobachtungsbild definiert.

5. Verfahren nach einem der Ansprüche 1-3, wobei die Objektlokalisierungsausgabe Bounding-Box-Daten umfasst, die eine jeweilige Bounding-Box definieren, die jedes des einen oder der mehreren Objekte in dem Beobachtungsbild umschließt.

6. Verfahren nach einem der Ansprüche 1-5, wobei das Erzeugen der Richtlinieneingabe basierend auf dem Beobachtungsbild, der Eingabetextsequenz und der Objektlokalisierungsausgabe Folgendes umfasst:
Erzeugen, aus der Objektlokalisierungsausgabe, einer Einzelkanal-Objektmaske, die einen Wert ungleich Null an mindestens einem Pixelort jedes des einen oder der mehreren Objekte in dem Beobachtungsbild und Null-Werte andernorts in dem Beobachtungsbild aufweist; und
Erzeugen einer kanalweisen Verkettung der Objektmaske und des Beobachtungsbildes.

7. Verfahren nach einem der Ansprüche 2-6, wobei das Verarbeiten der Richtlinieneingabe unter Verwendung des neuronalen Richtliniennetzwerks, um die Richtlinienausgabe zu erzeugen, umfasst:
Verarbeiten der kanalweisen Verkettung unter Verwendung eines neuronalen Encoder-Netzwerks, das auf der codierten Repräsentation der zweiten Textsegmente konditioniert ist, um eine codierte Repräsentation der kanalweisen Verkettung zu erzeugen;
Verarbeiten der codierten Repräsentation der kanalweisen Verkettung unter Verwendung eines neuronalen Token-Learner-Netzwerks, um eine Sequenz von Eingabetoken zu erzeugen; und
Verarbeiten der Sequenz von Eingabetoken unter Verwendung eines neuronalen Transformer-Netzwerks, um die Richtlinienausgabe zu erzeugen.

8. Verfahren nach Anspruch 7, wobei die Richtlinienausgabe für jede einer Mehrzahl von Aktionsdimensionen eine jeweilige Verteilung über mögliche Werte für die Aktionsdimension umfasst, und wobei das Auswählen der durch den Agenten durchzuführenden Aktion unter Verwendung der Richtlinienausgabe das Auswählen eines jeweiligen Wertes für eine oder mehrere der Aktionsdimensionen unter Verwendung der jeweiligen Verteilungen umfasst.

9. Verfahren nach einem der Ansprüche 7-8, wobei das neuronale Encoder-Netzwerk eine oder mehrere Konditionierungsschichten umfasst, die als Feature-wise Linear Modulation (FiLM)-Schichten konfiguriert sind, und/oder wobei das neuronale Netzwerk zur Objektlokalisierung als ein neuronales Vision Transformer (ViT)-Netzwerk konfiguriert ist.

10. Verfahren nach einem der Ansprüche 1-9, ferner umfassend:
Empfangen eines weiteren Beobachtungsbildes der Umgebung, wobei das weitere Beobachtungsbild einen nachfolgenden Zustand der Umgebung nach einem anfänglichen Zustand der Umgebung, in dem die ausgewählte Aktion durch den Agenten durchgeführt wurde, charakterisiert;
Erzeugen einer weiteren Richtlinieneingabe basierend auf dem weiteren Beobachtungsbild, der Eingabetextsequenz und der Objektlokalisierungsausgabe;
Verarbeiten der weiteren Richtlinieneingabe unter Verwendung des neuronalen Richtliniennetzwerks, um eine weitere Richtlinienausgabe zu erzeugen, die eine weitere durch den Agenten als Reaktion auf das weitere Beobachtungsbild durchzuführende Aktion definiert;
Auswählen einer weiteren durch den Agenten durchzuführenden Aktion unter Verwendung der weiteren Richtlinienausgabe; und
Bewirken, dass der Agent die ausgewählte weitere Aktion durchführt.

11. Verfahren nach einem der Ansprüche 1-10, wobei das neuronale Richtliniennetzwerk durch Imitationslernen unter Verwendung von Expertendemonstrationsdaten trainiert wird, die Interaktionen eines oder mehrerer Expertenagenten mit einer entsprechenden Umgebung charakterisieren, während Parameterwerte des neuronalen Netzwerks zur Objektlokalisierung während des Trainings fixiert gehalten werden.

12. Verfahren nach einem der Ansprüche 1-11, wobei die Objektlokalisierungsausgabe eine Null-Ausgabe ist, die angibt, dass das eine oder die mehreren in der Eingabetextsequenz referenzierten Objekte nicht detektiert werden.

13. Verfahren nach einem vorhergehenden Anspruch, wobei der Agent ein Roboter ist und sich der eine oder die mehreren Computer an Bord des Roboters befinden.

14. System, umfassend einen oder mehrere Computer und eine oder mehrere Speichervorrichtungen, die Anweisungen speichern, die betriebsfähig sind, wenn sie durch den einen oder die mehreren Computer ausgeführt werden, zu bewirken, dass der eine oder die mehreren Computer die Operationen des jeweiligen Verfahrens nach einem der Ansprüche 1-13 durchführen.

15. Computerspeichermedium, das mit Anweisungen codiert ist, die, wenn sie durch einen oder mehrere Computer ausgeführt werden, bewirken, dass der eine oder die mehreren Computer die Operationen des jeweiligen Verfahrens nach einem der Ansprüche 1-13 durchführen.

## Revendications

1. Procédé mis en œuvre par ordinateur, comprenant :
la réception d'une image d'observation (106) d'un environnement (104) ;
la réception d'une séquence de texte d'entrée (108) qui décrit une tâche qui doit être réalisée par un agent (102) dans l'environnement et qui fait référence à un ou plusieurs objets dans l'environnement ;
la génération d'une entrée de localisation d'objet (121) qui comporte (i) une phrase en langage naturel décrivant les un ou plusieurs objets et (ii) l'image d'observation ;
le traitement de l'entrée de localisation d'objet à l'aide d'un réseau neuronal de localisation d'objet (120) pour générer une sortie de localisation d'objet (122) qui identifie les emplacements respectifs des un ou plusieurs objets dans l'image d'observation ;
la génération d'une entrée de politique (132) sur la base de l'image d'observation, de la séquence de texte d'entrée et de la sortie de localisation d'objet ;
le traitement de l'entrée de politique à l'aide d'un réseau neuronal de politique (140) pour générer une sortie de politique (142) qui définit une action (144) qui doit être réalisée par l'agent en réponse à l'image d'observation ;
la sélection d'une action qui doit être réalisée par l'agent à l'aide de la sortie de politique ; et
le fait d'amener l'agent à réaliser l'action sélectionnée,
dans lequel l'environnement est un environnement de monde réel ; et
dans lequel l'agent est un agent mécanique.

2. Procédé selon la revendication 1, dans lequel la génération de l'entrée de localisation d'objet comprend :
l'analyse de la séquence de texte d'entrée pour identifier des premiers segments de texte qui décrivent les un ou plusieurs objets et des seconds segments de texte qui décrivent une ou plusieurs compétences requises par la tâche ; et
la génération de la phrase en langage naturel décrivant les un ou plusieurs objets en incluant les premiers segments de texte dans la phrase en langage naturel.

3. Procédé selon la revendication 2, dans lequel l'analyse de la séquence de texte d'entrée pour identifier les premiers segments de texte qui décrivent les un ou plusieurs objets comprend :
l'interrogation d'un réseau neuronal de modèle de langage pour identifier les premiers segments de texte à partir de la séquence de texte d'entrée.

4. Procédé selon l'une quelconque des revendications 1 à 3, dans lequel la sortie de localisation d'objet comprend un masque de segmentation qui définit l'emplacement de pixel respectif de chacun des un ou plusieurs objets dans l'image d'observation.

5. Procédé selon l'une quelconque des revendications 1 à 3, dans lequel la sortie de localisation d'objet comprend des données de boîte englobante qui définissent une boîte englobante respective qui englobe chacun des un ou plusieurs objets dans l'image d'observation.

6. Procédé selon l'une quelconque des revendications 1 à 5, dans lequel la génération de l'entrée de politique sur la base de l'image d'observation, de la séquence de texte d'entrée et de la sortie de localisation d'objet comprend :
la génération, à partir de la sortie de localisation d'objet, d'un masque d'objet à canal unique qui a une valeur non nulle au niveau d'au moins un emplacement de pixel de chacun des un ou plusieurs objets dans l'image d'observation, et des valeurs nulles ailleurs dans l'image d'observation ; et
la génération d'une concaténation canal par canal du masque d'objet et de l'image d'observation.

7. Procédé selon l'une quelconque des revendications 2 à 6, dans lequel le traitement de l'entrée de politique à l'aide du réseau neuronal de politique pour générer la sortie de politique comprend :
le traitement de la concaténation canal par canal à l'aide d'un réseau neuronal d'encodeur qui est conditionné par la représentation encodée des seconds segments de texte pour générer une représentation encodée de la concaténation canal par canal ;
le traitement de la représentation encodée de la concaténation canal par canal à l'aide d'un réseau neuronal d'apprentissage de jetons pour générer une séquence de jetons d'entrée ; et
le traitement de la séquence de jetons d'entrée à l'aide d'un réseau neuronal de transformateur pour générer la sortie de politique.

8. Procédé selon la revendication 7, dans lequel la sortie de politique comprend, pour chacune d'une pluralité de dimensions d'action, une distribution respective sur les valeurs possibles pour la dimension d'action, et dans lequel la sélection de l'action qui doit être réalisée par l'agent à l'aide de la sortie de politique comprend la sélection d'une valeur respective pour une ou plusieurs des dimensions d'action à l'aide des distributions respectives.

9. Procédé selon l'une quelconque des revendications 7 et 8, dans lequel le réseau neuronal d'encodeur comprend une ou plusieurs couches de conditionnement configurées sous forme de couches de modulation linéaire par caractéristique, FiLM, et/ou, dans lequel le réseau neuronal de localisation d'objet est configuré sous forme de réseau neuronal de transformateur de vision, ViT.

10. Procédé selon l'une quelconque des revendications 1 à 9, comprenant en outre :
la réception d'une autre image d'observation de l'environnement, dans lequel l'autre image d'observation caractérise un état ultérieur de l'environnement après un état initial de l'environnement dans lequel l'action sélectionnée a été réalisée par l'agent ;
la génération d'une autre entrée de politique sur la base de l'autre image d'observation, de la séquence de texte d'entrée et de la sortie de localisation d'objet ;
le traitement de l'autre entrée de politique à l'aide du réseau neuronal de politique pour générer une autre sortie de politique qui définit une autre action qui doit être réalisée par l'agent en réponse à l'autre observation ;
la sélection d'une autre action qui doit être réalisée par l'agent à l'aide de l'autre sortie de politique ; et
le fait d'amener l'agent à réaliser l'autre action sélectionnée.

11. Procédé selon l'une quelconque des revendications 1 à 10, dans lequel le réseau neuronal de politique est entraîné par apprentissage par imitation à l'aide de données de démonstration d'experts caractérisant les interactions d'un ou plusieurs agents experts avec un environnement correspondant tandis que les valeurs de paramètre du réseau neuronal de localisation d'objet sont maintenues fixes au cours de l'entraînement.

12. Procédé selon l'une quelconque des revendications 1 à 11, dans lequel la sortie de localisation d'objet est une sortie nulle indiquant que les un ou plusieurs objets référencés dans la séquence de texte d'entrée ne sont pas détectés.

13. Procédé selon une quelconque revendication précédente, dans lequel l'agent est un robot et les un ou plusieurs ordinateurs sont embarqués sur le robot.

14. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 13.

15. Support de stockage informatique encodé avec des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.
